(19) Europäisches Patentamt
European Patent Office
Office européen des brevets

(11) **EP 2 677 758 A1**

(12) **EUROPEAN PATENT APPLICATION**

(43) Date of publication:
**25.12.2013 Bulletin 2013/52**

(51) Int Cl.:
*H04N 21/25* (2011.01)      *H04N 21/475* (2011.01)
*H04N 21/482* (2011.01)      *H04N 21/466* (2011.01)

(21) Application number: **12305696.2**

(22) Date of filing: **19.06.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventors:
• **Vigouroux, Jean-Ronan
35000 Rennes (FR)**
• **Orlac, Izabela
35160 Breteil (FR)**
• **Lambert, Anne
35135 Chantepie (FR)**

(74) Representative: **Schmidt-Uhlig, Thomas
Deutsche Thomson OHG
European Patent Operations
Karl-Wiechert-Allee 74
30625 Hannover (DE)**

(54) **Mind opening content recommending system**

(57) The present invention relates to a method for recommending contents belonging to a set of contents identified with identifiers, wherein some of the contents of the set of contents have already been rated by users belonging to a set of users, the method comprising the following steps:
- Determining (20) clusters of users, wherein the clustering criterion is a similarity rating of the content ratings;
- Generating and displaying (21) cluster identifiers respectively associated to each determined cluster;
- Selecting (22) a displayed cluster identifier; and
- Displaying (23) identifiers of one or more recommended contents, the one or more recommended contents being the ones having the highest rating by the users of the clusters associated to the selected cluster identifier

```
┌─────────────────────┐
│ Determining clusters │  20
│      of users        │
└──────────┬──────────┘
           │
           ▼
┌─────────────────────┐
│  Generating and     │  21
│ displaying cluster   │
│    identifiers       │
└──────────┬──────────┘
           │
           ▼
┌─────────────────────┐
│ Selecting a displayed│  22
│  cluster identifier  │
└──────────┬──────────┘
           │
           ▼
┌─────────────────────┐
│Displaying identifiers│  23
│    of one or more    │
│recommended contents  │
└─────────────────────┘
```

Fig 2

**Description**

TECHNICAL FIELD

The invention relates to the field of content recommending systems.

BACKGROUND

Content recommendation systems try to recommend the most suitable contents to users, in particular by helping them to select a content among a rich set of contents. For example, a user who wants to watch an audiovisual content will wonder which movie, from a huge database of movies, will please him.

Two main types of content recommendation systems coexist. The first is of collaborative type: the recommendations for a particular user are determined based on ratings of other users on the provided contents. A state of the art of such type is documented in :

Toward the Next Generation of Recommender Systems: A Survey of the State-of-the-Art and Possible Extension, Gediminas Adomavicius and Alexander Tuzhilin, IEEE Transactions on Knowledge and Data Engineering, Vol 17, No 6, June 2005.

The second type of content recommendations system are based on content. A rating function is established, based on metadata describing the content. The advantage of this second type is the possibility to predict recommendations for particular user, even in the absence of rating of the other users.

On the one hand, the two described types of content recommendations systems have the tendency to confine people into stereotyped choices because they use hypothesis like "Similar people will make similar choices" or "People who had similar choices in the past will make similar choices in the future", in a restricted manner. As human beings are living beings, they change over time, and so do their tastes which are dynamic data and not static data. Therefore, as each user is unique, the provided restricted choice of contents may let the user miss a content which he really appreciates. On the other hand, a solution to avoid such taste confinement would be simply to give access to the whole content database, without influencing the user. No categorization would be done, and the user would be entirely free to choose the content he likes. The uniqueness of the taste of each user, as human being, would be respected. However, in this situation, it becomes very cumbersome for the user to retrieve a content of interest and comes to "look for a needle in a haystack". Therefore, faced with the problem of proposing targeted contents matching the tastes of a particular user, it seems it is a necessary evil to resort to the traditional content recommendation systems, which propose to the user a targeted but restricted choice of contents, with the unavoidable risk of missing contents which would have been of interest for this particular user.

The present invention proposes to alleviate this problem by proposing a technical solution helping the user retrieving contents matching his tastes without confining him into too stereotyped recommendations.

SUMMARY OF THE INVENTION

The present invention proposes a method for recommending contents belonging to a set of contents identified with identifiers, wherein some of the contents of the set of contents have already been rated by users belonging to a set of users, the method comprising the steps of determining clusters of users, wherein the clustering criterion is a similarity rating of the content ratings, generating and displaying cluster identifiers respectively associated to each determined cluster, selecting a displayed cluster identifier, and displaying identifiers of one or more recommended contents, the one or more recommended contents being the ones having the highest rating by the users of the clusters associated to the selected cluster identifier.

This way, each cluster represents a different recommender which the user is able to select. Various recommendations are proposed to the user, according to the selected cluster identifier.

Advantageously, each user of the set of users is characterized by user attributes, each generated cluster identifier being a function of the user attributes of the users belonging to the associated cluster.

This way, the user visualizes directly a displayed cluster as well as the average user profile associated to the displayed cluster.

Alternatively, each content of the set of contents is characterized by content attributes, the generated cluster identifier being a function of the best rated contents belonging to the cluster.

This has the advantage of identifying a displayed cluster with an associated identifier giving an overview of the contents preferred by the users of the displayed cluster.

Advantageously, the generated cluster identifier is an avatar, the graphical features of the avatar being function of the attributes of the users belonging to the associated cluster.

Alternatively, the generated cluster identifier is an image, the image being a function of the attributes of the users belonging to the associated cluster For a better understanding, the invention shall now be explained in more detail in the following description with reference to the figures. It is understood that the invention is not limited to the described embodiments and that specified features can also expediently be combined and/or modified without departing from the scope of the present invention as defined in the appended claims.

BRIEF DESCRIPTION OF THE DRAWINGS

Figure 1 shows a generic system allowing the implementation of the present invention

Figure 2 shows a flowchart according to a method of the present invention

Figure 3 illustrates a clustering method according to the present invention

Figure 4 illustrates how, upon selection of the user of a cluster, different recommendations are displayed

Figure 5 illustrates how identifiers are generated for the clusters according to users belonging to the cluster

DETAILED DESCRIPTION OF PREFERRED EMBODIMENTS

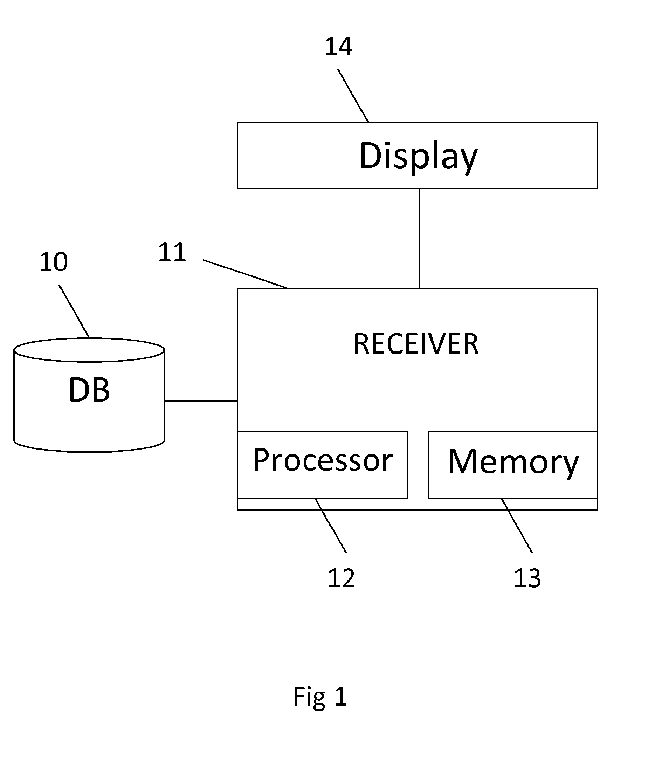

Figure 1 shows an architecture of a system allowing the implementation of the present invention.

A database DB 10 contains information relevant to the contents to be recommended to the users. The necessary information contained in the database DB 10 is transferred to the memory 13 of a receiver 11 and is adequately processed by the processor 12 of the receiver; upon this processing, a display 14 displays recommendations of contents to the users.

The database DB 10 contains n contents C1, ..., Cn as well as identifiers of theses contents IDC1, ..., IDCn. The database DB 10 contains also data representative of m users u1, ..., um, where m is an integer. The ratings given by a user to a content are also stored on the database 10. The data stored on the database DB 10 comprises information that may be represented as in the following table 1, wherein $R(u_i,C_j)$ represents a rating given by the user $u_i$ to the content $C_j$.

| Contents / Users | C1 | ... | Cj | ... | Cn |
|---|---|---|---|---|---|
| u1 | R(u1,C1) | ... | R(u1,Cj) | ... | R(u1,Cn) |
| ... | ... | ... | ... | ... | ... |
| ui | R(ui,C1) | ... | R(ui,Cj) | ... | R(ui,Cn) |
| ... | ... | ... | ... | ... | ... |
| un | R(un,C1) | ... | R(un,Cj) | ... | R(un,Cn) |

Table T1

In the illustrative described architecture, the database DB 10 is located externally to the receiver. It may, of course, be also a part of the receiver.

The database DB 10 comprises information related to the metadata characterizing the contents in an intrinsic manner. For example, a movie may be characterized by metadata as the genre of the movie (Action, comedy, family, horror, thriller), or the scenarist names of the movie. Other metadata characterizing the movie may also be used. Metadata characterizing a content Cj is denoted MC(Cj).

The database DB 10 comprises also information related to the metadata characterizing the users in an intrinsic manner. For example, a user is characterized by his age and his gender. Metadata characterizing a user ui is denoted MU(ui).

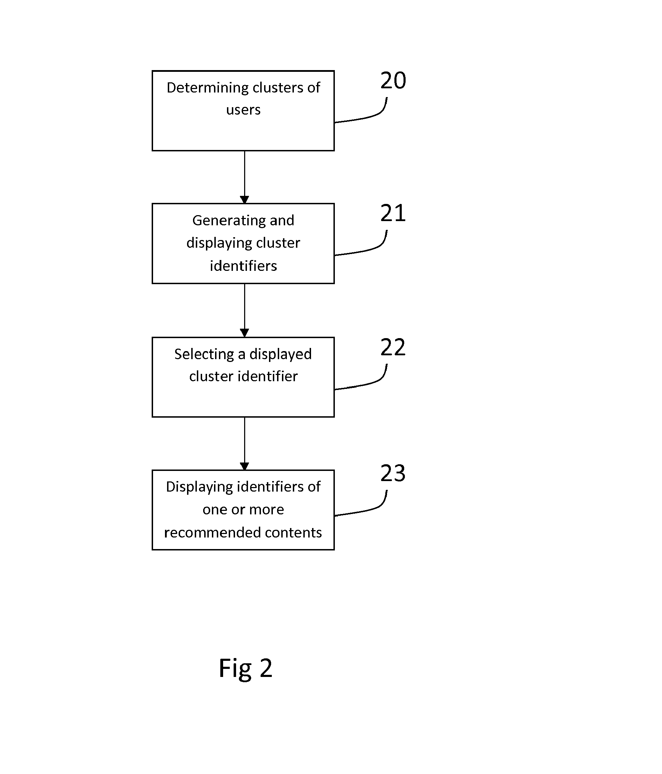

Figure 2 describes a method according to the present invention.

The processor 12 processes the information stored in the database DB 10 by determining clusters of users. The clustering criterion is the similarity rating of the users. Two users are considered close if they have a tendency to give the same ratings to the same contents. A similarity determination example will now be described. A rating matrix R representing ratings R(ui,Cj) is considered. Table T1 is an example of such a rating matrix. Considering Su1 the set of contents rated by user u1, and Su2 the set of contents rated by the user u2, the processor determines the Pearson similarity SIM between user u1 and user u2 using as follows:

$$SIM(u1,u2) = \frac{\sum_{k \in Su1 \cap Su2}\left(R(u1,Ck) - \overline{R(u1)}\right).\left(R(u2,Ck) - \overline{R(u2)}\right)}{\sqrt{\sum_{k \in Su1 \cap Su2}\left(R(u1,Ck) - \overline{R(u1)}\right)^2.\sum_{k \in Su1 \cap Su2}\left(R(u2,Ck) - \overline{R(u2)}\right)^2}}$$

Other methods of determining similarity between two data sets of same nature may be used as well.

It may occur that data is missing in the rating matrix R. In this case recommendations algorithms are used to predict the missing data and the missing data is replaced with the ratings predicted by such recommendations algorithms.

The determined data is then used to generate 21 the clusters. Generating clusters is the operation of regrouping similar users according to a similarity measure. An example of clustering will now be described. Distances DIST are first determined according to the determined similarities SIM.

Considering two users u1 and u2:

$$DIST(u1,u2) = 1 - SIM(u1,u2)$$

The determined mutual distances are then used as data input to a hierarchy clustering algorithm, and a dendrogram is then output. A pruning is then applied to the dendrogram at a particular hierarchy level, and homogeneous groups, clusters, are finally obtained. Such pruning is described in Clustering of the Self-Organizing Map, Juha Vesanto and Esa Alhoniemi, In IEEE Transactions on Neural Networks, Volume 11, Number 3, pp. 586-600, 2000.

Once the clusters have been generated, identifiers are generated for each of the generated clusters. The identifier of a cluster is for example the name of the preferred content of the clustered users of the cluster. For example, considering three movies C1, C2 and C3 respectively associated to the names of "Avatar", "ET" and "Star Wars", if the preferred content of the clustered users of the cluster is C3, then the identifier "Star Wars" will identify this cluster.

Once the cluster identifiers are displayed on the display 14, a user may interact with the display 14, thanks to a dedicated user interface, and selects 22 a cluster identifier. This selection triggers the display 23 of one or several contents identifiers, the one or several contents being the contents which have been the best rated by the clustered users of the displayed cluster identifier.

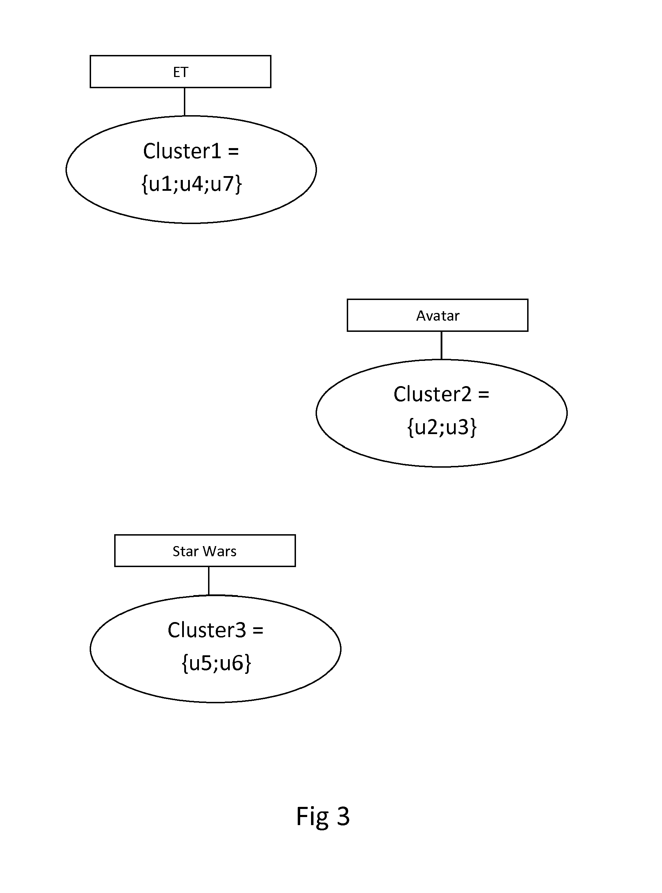

For example, a database DB 10, where three contents C1, C2 and C3 have been rated by seven users u1, ..., u7, and considering that three clusters Cluster1, Cluster2 and Cluster3 have been obtained, as illustrated in Figure 3 and in the following tables:

Table T21 describing Cluster1

|  | C1 ("Avatar") | C2 ("Star Wars") | C3 ("ET") |
|---|---|---|---|
| u1 | 3 | 5 | 8 |
| u4 | 4 | 9 | 6 |
| u7 | 7 | 3 | 5 |
| Total | 14 | 17 | 19 |

Table T22 describing Cluster2

|  | C1 ("Avatar") | C2 ("Star Wars") | C3 ("ET") |
|---|---|---|---|
| u2 | 9 | 7 | 6 |
| u3 | 10 | 8 | 5 |
| Total | 19 | 15 | 11 |

Table T23 describing Cluster3

|  | C1 ("Avatar") | C2 ("Star Wars") | C3 ("ET") |
|---|---|---|---|
| u5 | 7 | 8 | 7 |
| u6 | 5 | 6 | 6 |
| Total | 12 | 14 | 13 |

A user selects "ET", the identifier of Cluster1. Then, recommendations of the clustered users of Cluster1 are displayed on the display 14: according to the rating the clustered user gave to the contents C1, C2 and C3, the most preferred movie is first "ET", and then "Star Wars".

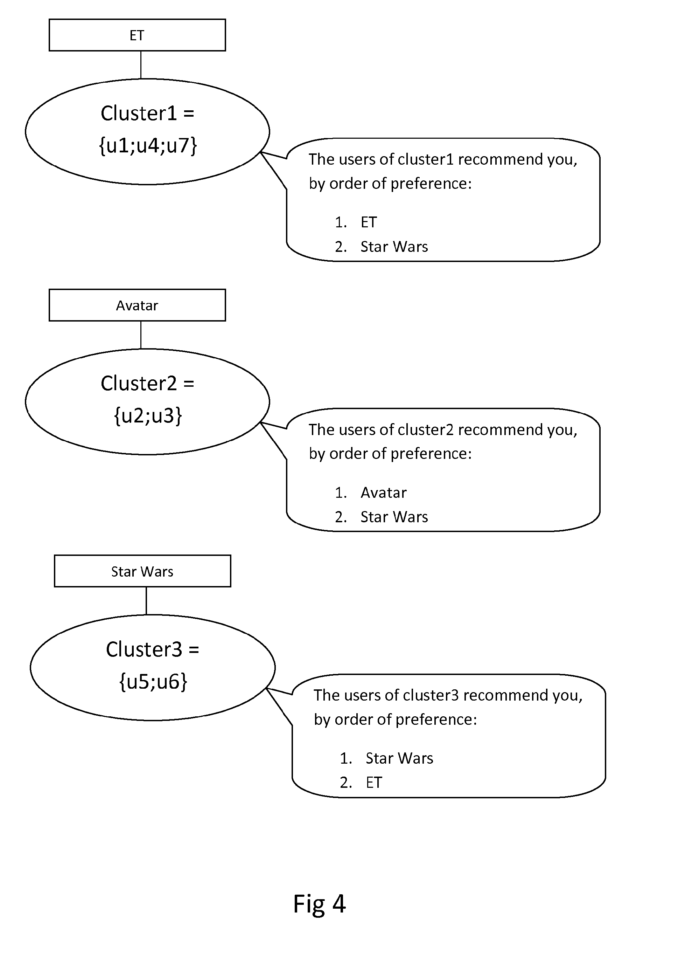

As illustrated in Figure 4, the identifiers of those two contents are displayed. This takes for example the form of a pop-up displayed on the display.

If the user selects "Avatar", that is the identifier of Cluster2, other recommendations will be displayed: recommendations of the clustered users of Cluster2. In this case, as illustrated in Figure 4, "Avatar" will be the most recommended content by the clustered users of Cluster2, followed by "Star Wars".

Had the user selected the identifier of Cluster3, that is "Star Wars", still other recommendations would be displayed.

The described method has the advantage of providing to an interacting user several recommenders, each cluster pointing to a dedicated recommender based on the ratings of the clustered users.

Advantageously, the user attributes MU(ui) characterizing the users are used to generate the identifier of the clusters. For example, age and gender are such user attributes.

Table T31

| Users | Age | Gender |
|---|---|---|
| u1 | 18 | Male |
| u2 | 25 | Female |
| u3 | 75 | Female |
| u4 | 45 | Male |
| u5 | 32 | Female |
| u6 | 67 | Male |
| u7 | 29 | Female |

Once the clustering is done, statistical data is processed on the determined clusters.

Table T41

| Cluster | Mean age (in years) | Gender repartition Male/Female (percentage) |
|---|---|---|
| Cluster1 | 30, 6 y | 66/33 |
| Cluster2 | 50 y | 0/100 |
| Cluster3 | 49,5 y | 50/50 |

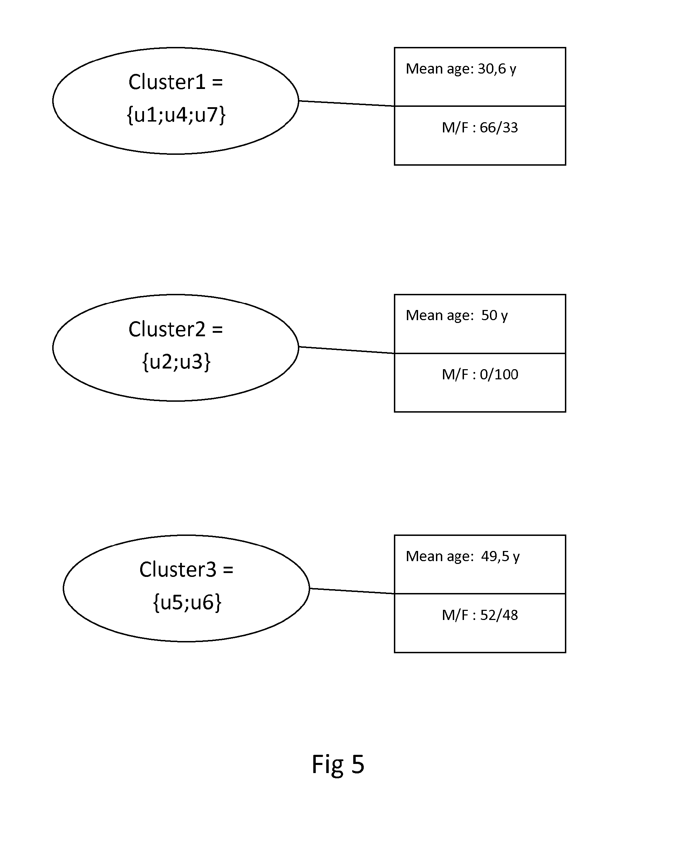

Then identifiers in the form of two-line tables are displayed in association with the cluster as illustrated in Figure 5. The two-lines tables cluster identifiers are generated as a function of the user attributes of the users belonging to the associated cluster. Upon displaying the generated identifiers, a user gets to know the average profile of the users belonging to a cluster, which helps him in selecting a cluster in order to get targeted recommendations. This has also the advantage that the user may select a cluster associated to a profile that is completely different from his profile, but whose recommended contents fit to his tastes.

Age and gender are only examples of data intrinsically characterizing users. Any socio-demographic data or statistic depending on them may be used to generate an identifier representing a cluster.

Advantageously, the identifiers of the displayed clusters are avatars, that is a picture representative of the average user of a cluster. For example, the memory of the receiver contains 20 images as described in the following table:

Table T51

| Age bracket | 0-10y | 11-20y | 21-30y | 31-40y | 41-50y | 51-60y | 61-70y | 71-80y | 81-90y | 91-100y |
|---|---|---|---|---|---|---|---|---|---|---|
| Male | I1 | I2 | I3 | I4 | 15 | I6 | I7 | I8 | I9 | I10 |
| Female | I11 | I12 | I13 | I14 | I15 | I16 | I17 | I18 | I19 | 120 |

For example, as the average user of Cluster1 is a 30,6 years old man, the generated identifier will be the picture I3. Similarly, I15 will represent the average user of Cluster2.

Alternatively, the content attributes MC(Ci) characterizing the contents are used to generate the identifier of the clusters.

For example, in the case where the contents are movies, the genre of the movies is used to generate the identifier. The following genres are assumed to be available, with one genre associated to each movie from one of the five following ones: Action, comedy, family, horror, thriller. Once the clusters have been determined, analysis is performed to determine which is the preferred genre of the clustered users of a determined cluster. For example, ten movies C1, ..., C10 are available in the database DB, with seven users clustered in three clusters Cluster1, Cluster2 and Cluster3 wherein:

- C1, C3 and C5 have "Horror" as genre
- C2 and C10 have "Family" as genre
- C4 and C9 have "Thriller" as genre
- C6 has "Comedy" as genre; and
- C7 has "Action" as genre,

and wherein:

Cluster1 = {u1;u4;u7}

Cluster2 = {u2;u3}

Cluster3 = {u5;u6}.

A representative rating is determined for each genre, and for each cluster. For "Family" and Cluster2, it would be for example:

$$Average\ rating\ (Family, Cluster1) =$$

$$\frac{R(u2, C2) + R(u3, C2) + R(u2, C10) + R(u3, C10)}{4}$$

In a similar manner, average ratings are determined for each genre of a generated cluster. Then, for each cluster, the genre whose Average rating is the highest is used as identifier. If, for example, the best Average rating for cluster2 is Horror, then the identifier "Horror" is generated and displayed in association with the Cluster2.

This example illustrates the embodiment wherein the generated cluster identifier is a function of the best rated contents belonging to the generated cluster.

Advantageously, the identifiers of the displayed clusters are images representative of the contents of the clusters.

For example:

- "Horror" will be represented with Image1 (e.g : an image of man with a saw)
- "Family" will be represented with Image2 (e.g: an image of family sitting on a couch)
- "Thriller" will be represented with Image3 (e.g: an image evocating suspense)
- "Comedy" will be represented with Image4 (e.g: an image of a famous comedy actor)
- "Action" will be represented with Image5 (e.g: an image of a film poster of a famous action movie)

Then, upon the clustering step, Cluster2 will be displayed associated with the associated image, that is in this case Image2.

**Claims**

1.   Method for recommending contents belonging to a set of contents identified with identifiers, wherein some of the contents of the set of contents have already been rated by users belonging to a set of users, the method comprising the following steps:

   - Determining (20) clusters of users, wherein the clustering criterion is a similarity rating of the content ratings;
   - Generating and displaying (21) cluster identifiers respectively associated to each determined cluster;
   - Selecting (22) a displayed cluster identifier; and
   - Displaying (23) identifiers of one or more recommended contents, the one or more recommended contents being the ones having the highest rating by the users of the clusters associated to the selected cluster identifier

2.   The method of claim 1, wherein each user of the set of users is **characterized by** user attributes, each generated cluster identifier being a function of the user attributes of the users belonging to the associated cluster

3.   The method of claim 1, wherein each content of the set of contents is **characterized by** content attributes, the generated cluster identifier being a function of the best rated contents belonging to the cluster

4.   The method of claim 2, wherein the generated cluster identifier is an avatar, the graphical features of the  avatar being function of the attributes of the users belonging to the associated cluster

5.   The method of claim 3, wherein the generated cluster identifier is an image, the image being a function of the attributes of the users belonging to the associated cluster

14

Display

10    11

DB        RECEIVER

Processor    Memory

12    13

Fig 1

Determining clusters of users **20**

Generating and displaying cluster identifiers **21**

Selecting a displayed cluster identifier **22**

Displaying identifiers of one or more recommended contents **23**

Fig 2

ET

Cluster1 =
{u1;u4;u7}

Avatar

Cluster2 =
{u2;u3}

Star Wars

Cluster3 =
{u5;u6}

Fig 3

ET

Cluster1 =
{u1;u4;u7}

The users of cluster1 recommend you, by order of preference:

1. ET
2. Star Wars

Avatar

Cluster2 =
{u2;u3}

The users of cluster2 recommend you, by order of preference:

1. Avatar
2. Star Wars

Star Wars

Cluster3 =
{u5;u6}

The users of cluster3 recommend you, by order of preference:

1. Star Wars
2. ET

Fig 4

Cluster1 =
{u1;u4;u7}

| Mean age: 30,6 y |
| M/F : 66/33 |

Cluster2 =
{u2;u3}

| Mean age:  50 y |
| M/F : 0/100 |

Cluster3 =
{u5;u6}

| Mean age:  49,5 y |
| M/F : 52/48 |

Fig 5

EP 2 677 758 A1

Europäisches
Patentamt

European
Patent Office

Office européen
des brevets

# EUROPEAN SEARCH REPORT

Application Number

EP 12 30 5696

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 975 866 A1 (SONY DEUTSCHLAND GMBH [DE]) 1 October 2008 (2008-10-01) | 1,3 | INV. |
| Y | * abstract * | 4,5 | H04N21/25 |
|  | * paragraphs [0010] - [0015], [0017], [0020] - [0021], [0023] - [0024], [0028] - [0029], [0031] - [0032], [0034] - [0035], [0037], [0039] * |  | H04N21/475 |
|  | * claims 1,2,4,5,7-9,15,16,18,19,21-24,27-28,31-32 * |  | H04N21/482 |
|  | * figures 1-3,4b,5-11 * |  | H04N21/466 |
|  | ----- |  |  |
| X | US 2011/061069 A1 (ARTE LAXMI A [US] ET AL) 10 March 2011 (2011-03-10) | 1-3 |  |
|  | * abstract * |  |  |
|  | * figures 1,3,5-6,8-10 * |  |  |
|  | * paragraphs [0014], [0015], [0018], [0024] - [0026], [0034] - [0036], [0041] - [0045], [0047] - [0051] * |  |  |
|  | * claims 1,3,4-5,7-8,10-11,13-14,16-18,20-21 * |  |  |
|  | ----- |  | TECHNICAL FIELDS SEARCHED (IPC) |
| X | US 2007/204287 A1 (CONRADT JONATHAN L [US] ET AL) 30 August 2007 (2007-08-30) | 1-3 | H04N |
|  | * abstract * |  | G06Q |
|  | * figures 1-4 * |  |  |
|  | * paragraphs [0004] - [0005], [0014] - [0015], [0017] - [0021], [0023] - [0026], [0028], [0035] - [0037], [0040] - [0042], [0044] - [0049] * |  |  |
|  | * claims 1-20 * |  |  |
|  | ----- |  |  |
| Y | WO 2008/132240 A1 (AMINIAN MEHDI [CH]; CRIVELLI ZENO [CH]) 6 November 2008 (2008-11-06) | 4,5 |  |
|  | * page 8, line 29 - page 9, line 7 * |  |  |
|  | ----- |  |  |

The present search report has been drawn up for all claims

| Place of search | Date of completion of the search | Examiner |
|---|---|---|
| The Hague | 25 September 2012 | Beaudet, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 30 5696

This annex lists the patent family members relating to the patent documents cited in the above-mentioned European search report.
The members are as contained in the European Patent Office EDP file on
The European Patent Office is in no way liable for these particulars which are merely given for the purpose of information.

25-09-2012

| Patent document cited in search report | | | Publication date | Patent family member(s) | | | Publication date |
|---|---|---|---|---|---|---|---|
| EP | 1975866 | A1 | 01-10-2008 | CN | 101681469 | A | 24-03-2010 |
| | | | | EP | 1975866 | A1 | 01-10-2008 |
| | | | | JP | 2010522945 | A | 08-07-2010 |
| | | | | KR | 20090122464 | A | 30-11-2009 |
| | | | | US | 2010088649 | A1 | 08-04-2010 |
| | | | | WO | 2008119436 | A1 | 09-10-2008 |
| US | 2011061069 | A1 | 10-03-2011 | NONE | | | |
| US | 2007204287 | A1 | 30-08-2007 | NONE | | | |
| WO | 2008132240 | A1 | 06-11-2008 | EP | 2153388 | A1 | 17-02-2010 |
| | | | | US | 2010106730 | A1 | 29-04-2010 |
| | | | | WO | 2008132240 | A1 | 06-11-2008 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Toward the Next Generation of Recommender Systems: A Survey of the State-of-the-Art and Possible Extension, Gediminas Adomavicius and Alexander Tuzhilin. *IEEE Transactions on Knowledge and Data Engineering,* June 2005, vol. 17 (6

- Clustering of the Self-Organizing Map, Juha Vesanto and Esa Alhoniemi. *IEEE Transactions on Neural Networks,* 2000, vol. 11 (3), 586-600